# FASCICULE DE BREVET EUROPEEN

(11) **EP 2 884 393 B1**
(45) Date de publication et mention de la délivrance du brevet: **17.04.2019**
(21) Numéro de dépôt: 14290368.1
(22) Date de dépôt: 03.12.2014
(51) Int. Cl.: G06F 11/36

(54) **Procédé et système d'aide à la vérification et à la validation d'une chaîne d'algorithmes**
Verfahren und -system zur Überprüfung und Validierung einer Algorithmenkette
Method and system for assisting with the verification and validation of a chain of algorithms

(30) Priorité: 10.12.2013 FR 1302881
(43) Date de publication de la demande: 17.06.2015
(73) Titulaire: MBDA France, 92350 Le Plessis-Robinson (FR)
(72) Inventeur: Kotenkoff, Alexandre, 92260 Fontenay-Aux-Roses (FR); Vigouroux, David, 92350 Le Plessis-Robinson (FR); Vivares, Antoine, 75015 Paris (FR); Hebert, Olivier, 75014 Paris (FR); Perel, Christophe, 92170 Vanves (FR)
(74) Mandataire: Gevers & Orès

(56) Documents cités:
- EP-A2- 0 695 990
- US-A1- 2009 328 002
- US-A1- 2010 281 469
- US-A1- 2012 089 873
- US-A1- 2012 151 271

## Description

La présente invention concerne un procédé et un système d'aide à la vérification et à la validation d'une chaîne d'algorithmes.

Dans le cadre de la présente invention, on entend par chaîne d'algorithmes un ensemble d'algorithmes coopérant ensemble et traitant une pluralité de données dans le but de mettre en oeuvre une ou plusieurs fonctions particulières, en particulier d'un dispositif utilisateur sur lequel est montée cette chaîne d'algorithmes.

La présente invention peut s'appliquer à une chaîne d'algorithmes embarquée sur un dispositif ou engin, par exemple sur un missile, ou bien à une chaîne d'algorithmes non embarquée avant son montage sur un dispositif utilisateur.

La validation et la vérification d'une chaîne d'algorithmes (ou chaîne algorithmique) sont des tâches très complexes et coûteuses, en raison notamment des nombreux incréments qu'impliquent la correction de bogues (ou « bugs ») et le réglage de critères, et en raison des nombreuses interactions entre les différents modules algorithmiques. Cette complexité engendre également une difficulté de planification de la tâche de validation et de vérification d'une chaîne d'algorithmes.

En raison de cette complexité, une intervention humaine par un opérateur ayant une connaissance approfondie de la chaîne d'algorithmes est nécessaire. La vérification exhaustive par un opérateur humain de tous les paramètres et données à analyser est longue, fastidieuse, voire même impossible. De plus, l'opérateur n'est pas à l'abri d'erreurs, et il ne peut pas analyser tous les paramètres pertinents.

Cette solution usuelle de vérification et de validation d'une chaîne d'algorithmes reposant sur un seul opérateur humain n'est donc pas satisfaisante.

Par le document US-2009/0328002, on connaît une méthode et un dispositif d'analyse et de détection de bogues de programmes informatiques et de proposition de correction.

L'invention est définie par les revendications indépendantes 1 et 6. Les aspects supplémentaires de l'invention sont définis dans dans les revendications dépendantes.

La présente invention a pour objet de remédier à l'inconvénient précité. Elle concerne un procédé d'aide à la vérification et à la validation d'une chaîne d'algorithmes, permettant d'apporter une aide à un opérateur humain.

A cet effet, selon l'invention, ledit procédé est remarquable en ce qu'il comprend :
a) une étape d'instrumentation de la chaîne d'algorithmes, réalisant une capture automatique de données comprenant au moins certaines des données suivantes : des données d'interface et des données internes d'algorithmes de la chaîne d'algorithmes ;
b) une étape de vérification automatique de règles fonctionnelles ;
c) une étape d'apprentissage pour modéliser par apprentissage des contraintes et des critères d'algorithmes de la chaîne d'algorithmes, en prenant en compte des validations réalisées par un opérateur humain, et des données capturées ; et
d) une étape de détection automatique de bogues ou de problèmes fonctionnels de la chaîne d'algorithmes à l'aide de moyens d'apprentissage statistique.

Ledit procédé conforme à l'invention permet d'améliorer et de faciliter le travail de validation d'algorithmes complexes, tel que ceux utilisés par exemple dans le domaine de l'aéronautique. Il permet notamment d'aider un opérateur à détecter plus rapidement des bogues ou « bugs » (à savoir des défauts de conception et de réalisation d'un algorithme se manifestant par des anomalies de fonctionnement) et des problèmes fonctionnels de la chaîne d'algorithmes vérifiée, ce qui permet de diminuer les délais et les coûts de la validation fonctionnelle de la chaîne d'algorithmes.

Selon l'invention, dans une étape antérieure, un ensemble de données de la chaîne d'algorithmes sont stockées dans des fichiers de sauvegarde, et l'étape a) consiste à lire ces fichiers de sauvegarde et à réaliser des requêtes sur les données contenues dans ces fichiers de sauvegarde.

Ledit procédé comprend également au moins certaines des caractéristiques ou étapes suivantes, prises individuellement ou en combinaison :
- l'étape b) est configurée pour permettre de détecter une violation de règles et pour permettre de détecter si des éléments doivent être vérifiés par un opérateur ;
- l'étape d) réalise, à l'aide de moyens d'apprentissage statistique, une corrélation de données pour déterminer des règles générales de variations de sorties d'algorithmes de la chaîne d'algorithmes, et elle émet une alerte si une variation supérieure à un seuil donné d'une sortie d'un algorithme, par rapport à une sortie prédite, est détectée ;
- l'étape d) analyse la variation de résultats d'algorithmes de la chaîne d'algorithmes de manière à détecter, le cas échéant, des discontinuités et des variations anormales ;
- le procédé comprend une étape supplémentaire e) de classification de cas de test suspects (ou problématiques) identifiés ;
- le procédé comprend également une étape de définition de métriques et de visualisation de ces métriques.

En outre, avantageusement, l'étape c) est configurée :
- pour réaliser une analyse d'une structure fonctionnelle de la chaîne d'algorithmes et d'un code associé ;
- pour réaliser un apprentissage à l'aide de cas de test notés qui sont fournis par un opérateur ; et
- pour identifier les cas de test pertinents et ceux suspects, et pour présenter à l'opérateur au moins les cas de test suspects identifiés.

La présente invention permet notamment :
- de détecter, avec plus d'efficacité, des bogues dans des flots de données, utilisés par des algorithmes de la chaîne d'algorithmes ;
- d'aider un opérateur en charge de la validation, à analyser ces données ; et
- d'accroître la confiance dans la phase de validation.

La présente invention concerne également un système d'aide à la vérification et à la validation fonctionnelle d'une chaîne d'algorithmes.

Selon l'invention, ledit système comporte au moins les modules suivants, coordonnés par un système expert :
- un module d'instrumentation de la chaîne d'algorithmes, réalisant une capture automatique de données comprenant au moins certaines des données suivantes : des données d'interface et des données internes d'algorithmes de la chaîne d'algorithmes ;
- un module de vérification automatique de règles fonctionnelles ;
- un module d'apprentissage pour modéliser par apprentissage des contraintes et des critères d'algorithmes de la chaîne d'algorithmes, en prenant en compte des validations réalisées par un opérateur humain ; et
- un module de détection automatique de bogues ou de problèmes fonctionnels de la chaîne d'algorithmes à l'aide de moyens d'apprentissage statistique.

Avantageusement, ledit système comporte également :
- un ensemble de fichiers de sauvegarde dans lesquels sont stockées des données de la chaîne d'algorithmes, ledit module d'instrumentation étant configuré pour lire ces fichiers de sauvegarde et pour réaliser des requêtes sur les données contenues dans ces fichiers de sauvegarde ; et/ou
- une unité de visualisation de données issues du module d'instrumentation ; et/ou
- une unité de saisie de données permettant à un opérateur de saisir des données ; et/ou
- une unité de présentation des résultats issus du module de détection de bogues ; et/ou
- un module de classification de cas de test suspects (ou problématiques) identifiés.

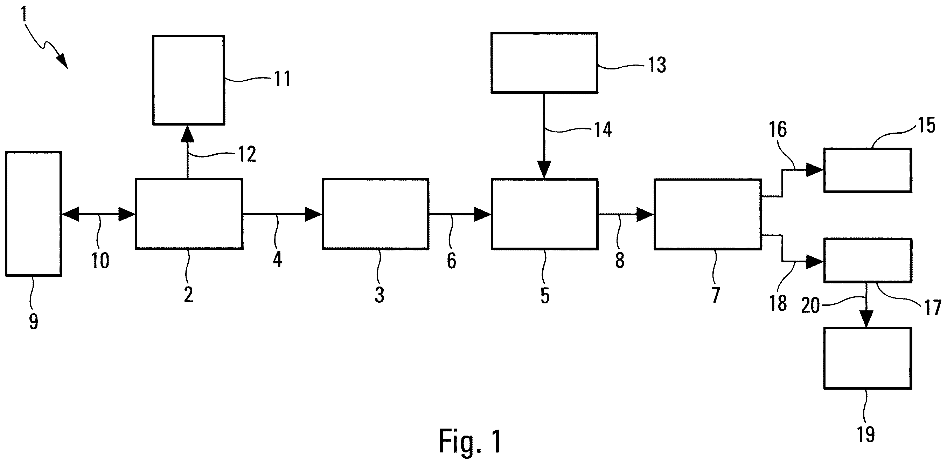

L'unique figure 1 du dessin annexé fera bien comprendre comment l'invention peut être réalisée. Cette figure 1 est le schéma synoptique d'un système conforme à la présente invention.

Le système 1 conforme à l'invention et représenté schématiquement sur la figure 1 est destiné à aider à la vérification et à la validation fonctionnelle d'une chaîne d'algorithmes.

Selon l'invention, ce système 1 comporte au moins les modules suivants, coordonnés par un système expert (non représenté) :
- un module d'instrumentation 2 de la chaîne d'algorithmes, qui est formé de manière à réaliser une capture automatique de données comprenant au moins certaines des données suivantes : des données d'interface et des données internes d'algorithmes de la chaîne d'algorithmes ;
- un module 3 de vérification automatique de règles fonctionnelles, qui est relié par l'intermédiaire d'une liaison 4 (de transmissions de données) audit module d'instrumentation 2 ;
- un module d'apprentissage 5 qui est relié par l'intermédiaire d'une liaison 6 (de transmissions de données) audit module de vérification 3 et qui est formé de manière à modéliser par apprentissage des contraintes et des critères d'algorithmes de la chaîne d'algorithmes, en prenant en compte des validations réalisées par un opérateur humain, et des données capturées par le module d'instrumentation 2 ; et
- un module de détection 7 qui est relié par l'intermédiaire d'une liaison 8 (de transmissions de données) audit module d'apprentissage 5 et qui est formé de manière à détecter automatiquement des bogues et de problèmes fonctionnels de la chaîne d'algorithmes, à l'aide de moyens d'apprentissage statistique.

Le système 1 comporte, de plus, un ensemble 9 de fichiers de sauvegarde dans lesquels sont stockées des données de la chaîne d'algorithmes. Le module d'instrumentation 2 est configuré pour lire ces fichiers de sauvegarde et pour réaliser des requêtes sur les données contenues dans ces fichiers de sauvegarde, comme illustré par une double flèche 10.

Ledit système 1 comporte, de plus :
- une unité de visualisation 11 qui est reliée par l'intermédiaire d'une liaison 12 au module d'instrumentation 2 et qui est formée de manière à visualiser (en les affichant par exemple sur un écran non représenté ou en les imprimant) des données issues du module d'instrumentation 2, afin qu'un opérateur puisse prendre connaissance de ces données ; et
- une unité de saisie de données 13 permettant à un opérateur de saisir des données dans le système 1 et plus particulièrement dans le module d'apprentissage 5 (comme illustré par une liaison 14 sur la figure 1), et notamment des validations réalisées par l'opérateur.

Le système 1 qui comporte des modules (ou moteurs) réalisant des opérations mises en oeuvre de façon automatique, apporte ainsi une aide à la vérification et à la validation d'une chaîne d'algorithmes (qui présente des phénomènes de régularité et de reproductibilité).

Ledit système 1 permet, en particulier, d'améliorer et de faciliter le travail de validation d'algorithmes complexes utilisés notamment dans le domaine aéronautique. Il permet d'aider un opérateur à détecter plus rapidement des bogues ou « bugs » (à savoir des défauts de conception et de réalisation d'un algorithme se manifestant par des anomalies de fonctionnement) et des problèmes fonctionnels de la chaîne d'algorithmes, ce qui permet de diminuer les délais et les coûts d'une validation fonctionnelle de la chaîne d'algorithmes.

Le module 2 d'instrumentation de la chaîne d'algorithmes permet la capture des données d'interfaces et/ou des données internes des algorithmes, qui sont pertinentes pour l'analyse et qui sont générées lors de l'exécution d'une chaîne d'algorithmes. Au moment de l'exécution d'une chaîne d'algorithmes (ou chaîne algorithmique), l'ensemble des données (entrées/sorties et données internes pertinentes des algorithmes) sont stockées dans des fichiers de sauvegarde (par exemple de type : csv, XML, base de données,...) de l'ensemble 9. Le module d'instrumentation 2 est capable de lire ces fichiers et de réaliser différentes requêtes intelligentes sur les données contenues dans ces fichiers de sauvegarde.

En outre, le module de vérification 3 (ou module de règles) permet la vérification de règles fonctionnelles simples, grâce à un module d'inférence (non représenté). Les utilisateurs du système sont en charge d'écrire les règles fonctionnelles simples dans un dictionnaire de règles. Grâce au système expert et au module d'inférence, le module 3 arrive à combiner les règles, afin de déterminer s'il existe des violations d'une ou plusieurs de ces règles ou si certains éléments demandent une vérification de la part de l'opérateur en charge des tests.

Par ailleurs, le module d'apprentissage 5, issu du domaine de l'intelligence artificielle, permet la modélisation par apprentissage des contraintes et des critères des algorithmes. Ce module d'apprentissage 5 permet de capitaliser sur l'expérience acquise lors de la validation de scénarios par des opérateurs humains afin d'automatiser, de plus en plus, cette tâche.

Pour ce faire, ce module d'apprentissage 5 s'appuie sur une analyse de la structure fonctionnelle de la chaîne d'algorithmes considérée et du code, utilisant des métriques de quantification du risque que telle ou telle sous-fonction ou partie du code soit une source de problèmes fonctionnels.

Pour réaliser l'apprentissage du module 5, un opérateur humain doit fournir (via l'unité de saisie 13 notamment) un ensemble de cas de test notés sur un ensemble de critères et de contraintes (en indiquant par exemple si un scénario s'est bien déroulé ou sur quels aspects il est en défaut,...). Cette indication peut être réalisée de manière interactive lors d'un travail de validation fonctionnelle (manuelle) effectuée par l'opérateur. Grâce à cette base de tests et à l'ensemble des entrées/sorties des algorithmes (et en particulier de données du module 2), le module 5 est capable d'identifier les cas de test problématiques (ou suspects), et de présenter à l'utilisateur les cas de tests pertinents et/ou ceux suspects, par exemple via une unité de présentation d'informations 19 précisée ci-dessous ou via l'unité de visualisation 11.

Le module d'apprentissage 5 peut comprendre des moyens se basant sur l'une des caractéristiques suivantes :
- des machines à vecteur de support (SVM) ;
- un « boosting » ;
- des réseaux de neurones pour un apprentissage supervisé ou non supervisé ;
- des arbres de décision ;
- des méthodes statistiques comme, par exemple, un modèle de mixture gaussienne ;
- une régression logistique ; et
- une analyse discriminante linéaire.

En outre, le module 7 de détection automatique de bogues détecte, grâce à l'utilisation de technologies (ou moyens) d'apprentissage statistique, des bogues potentiels dans la chaîne d'algorithmes. Un module de statistiques, pris en compte, réalise une corrélation des données considérées (notamment de données capturées de la chaîne d'algorithmes) afin de déterminer des règles générales d'évolution (ou de variation) des sorties des algorithmes. Si une variation trop importante des sorties d'un algorithme par rapport à une sortie prédite est identifiée, une alerte est émise à destination de l'opérateur (notamment au moyen d'une unité d'alerte 15 qui est, par exemple, reliée par l'intermédiaire d'une liaison 16 au module de détection 7). Ce module 7 permet également d'analyser la variation des résultats des algorithmes afin de détecter des discontinuités ou des variations en apparence anormales.

Par ailleurs, le système 1 comprend, de plus, un module de classification 17 de cas de test suspects (ou problématiques).

Lorsque le système 1 identifie un ensemble de cas de test problématiques, le module de classification 17 qui reçoit ces cas via une liaison 18 les organise en groupes. Ces groupes sont construits de façon à rassembler les cas de test par erreurs fonctionnelles similaires. Ceci permet à l'utilisateur du système 1, auxquels ils sont présentés à l'aide par exemple d'une unité de visualisation 19 reliée par une liaison 20 au module de classification 17, de ne pas être submergé par un nombre trop élevé de cas de test, en réalisant une pré-analyse quantitative des scénarios. Les résultats sont ordonnés en fonction de leur pertinence et de métriques, et sont présentés ainsi.

On notera que la présente invention est différente des méthodes formelles qui permettent de prouver par la logique que le code source remplit bien l'ensemble des exigences fonctionnelles définies. En effet, le système 1 permet de capitaliser sur l'expérience d'un utilisateur afin de faciliter la validation de code non prouvé.

Pour accélérer l'analyse par un opérateur humain dans les phases de diagnostic, le système 1 comprend un module en charge de la définition de métriques et de la visualisation intelligente de ces métriques.

Le système 1 combine ainsi un ensemble de modules et de services capables de corréler, de façon pertinente, une grande masse d'informations, et notamment :
- des informations directement présentes dans les données produites par des algorithmes de la chaîne d'algorithmes ;
- des informations calculées par des post-traitements automatiques de ces données ;
- des informations a priori issues d'analyses sur la structure des données et du code ; et/ou
- des informations issues d'un apprentissage : apprentissage en interaction avec l'opérateur en charge des travaux de validation (apprentissage des procédures de vérification) et apprentissage de certains phénomènes prédictibles du comportement des algorithmes lorsque de tels phénomènes existent.

Ledit système 1 permet ainsi notamment :
- de détecter, avec plus d'efficacité, des bogues dans des flots de données, utilisés par des algorithmes de la chaîne d'algorithmes ;
- d'aider des opérateurs en charge de la validation, à analyser ces données ; et
- d'accroître la confiance dans la phase de validation.

## Revendications

1. Procédé d'aide à la vérification et à la validation fonctionnelle d'une chaîne d'algorithmes, ledit procédé comprenant une suite d'étapes comprenant au moins :
a) une étape d'instrumentation de la chaîne d'algorithmes, réalisant une capture automatique de données comprenant au moins certaines des données suivantes : des données d'interface et des données internes d'algorithmes de la chaîne d'algorithmes, l'étape a) consistant à lire les fichiers de sauvegarde dans lesquels sont stockées un ensemble de données de la chaîne d'algorithmes et à réaliser des requêtes sur les données contenues dans ces fichiers de sauvegarde ;
b) une étape de vérification automatique de règles fonctionnelles, l'étape b) étant configurée pour permettre de détecter une violation de règles et pour permettre de détecter si des éléments doivent être vérifiés par un opérateur ;
c) une étape d'apprentissage pour modéliser par apprentissage des contraintes et des critères d'algorithmes de la chaîne d'algorithmes, en prenant en compte des validations réalisées par un opérateur humain lors d'une validation fonctionnelle, et des données capturées, l'apprentissage utilisant des moyens se basant sur l'une des caractéristiques suivantes :
- des machines à vecteur de support ;
- des réseaux de neurones ;
- des arbres de décision ;
- des méthodes statistiques ; et
- une analyse discriminante linéaire ; et
d) une étape de détection automatique de bogues ou de problèmes fonctionnels de la chaîne d'algorithmes à l'aide de moyens d'apprentissage statistique, l'étape d) réalisant à l'aide de moyens d'apprentissage statistique, une corrélation des données comprenant au moins des données de la chaîne d'algorithmes pour déterminer des règles générales de variations de sorties d'algorithmes de la chaîne d'algorithmes, et émettant une alerte si une variation supérieure à un seuil donné d'une sortie d'algorithme, par rapport à une sortie prédite, est détectée.

2. Procédé selon la revendication 1,
**caractérisé en ce que** l'étape c) est configurée :
- pour réaliser une analyse d'une structure fonctionnelle de la chaîne d'algorithmes et d'un code associé ;
- pour réaliser un apprentissage à l'aide de cas de test notés qui sont fournis par un opérateur ; et
- pour identifier les cas de test pertinents et ceux suspects, et pour présenter à l'opérateur au moins les cas de test suspects identifiés.

3. Procédé selon l'une des revendications 1 et 2,
**caractérisé en ce que** l'étape d) analyse la variation de résultats d'algorithmes de la chaîne d'algorithmes de manière à détecter, le cas échéant, des discontinuités et des variations anormales.

4. Procédé selon l'une quelconque des revendications précédentes,
**caractérisé en ce qu'**il comprend une étape supplémentaire e) de classification de cas de test suspects identifiés.

5. Procédé selon l'une quelconque des revendications précédentes,
**caractérisé en ce qu'**il comprend une étape de définition de métriques et de visualisation de ces métriques.

6. Système d'aide à la vérification et à la validation fonctionnelle d'une chaîne d'algorithmes, ledit système (1) comportant un ensemble (9) de fichiers de sauvegarde dans lesquels sont stockées des données de la chaîne d'algorithmes, et au moins les modules suivants, coordonnés par un système expert :
- un module (2) d'instrumentation de la chaîne d'algorithmes, réalisant une capture automatique de données comprenant au moins certaines des données suivantes : des données d'interface et des données internes d'algorithmes de la chaîne d'algorithmes, le module (2) d'instrumentation étant configuré pour lire les fichiers de sauvegarde et pour réaliser des requêtes sur les données contenues dans ces fichiers de sauvegarde ;
- un module (3) de vérification automatique de règles fonctionnelles, pour permettre de détecter une violation de règles et pour permettre de détecter si des éléments doivent être vérifiés par un opérateur ;
- un module (5) d'apprentissage pour modéliser par apprentissage des contraintes et des critères d'algorithmes de la chaîne d'algorithmes, en prenant en compte des validations réalisées par un opérateur humain lors d'une validation fonctionnelle et des données capturées par le module (2) d'instrumentation, le module d'apprentissage (5) comprenant des moyens se basant sur l'une des caractéristiques suivantes :
• des machines à vecteur de support ;
• des réseaux de neurones ;
• des arbres de décision ;
• des méthodes statistiques ; et
• une analyse discriminante linéaire ; et
- un module (7) de détection automatique de bogues ou de problèmes fonctionnels de la chaîne d'algorithmes à l'aide de moyens d'apprentissage statistique, ledit module (5) réalisant, à l'aide de moyens d'apprentissage statistique, une corrélation des données comprenant au moins des données de la chaîne d'algorithmes pour déterminer des règles générales de variations de sorties d'algorithmes de la chaîne d'algorithmes, une alerte étant émise si une variation supérieure à un seuil donné d'une sortie d'un algorithme, par rapport à une sortie prédite, est détectée.

7. Système selon la revendication 6,
**caractérisé en ce qu'**il comporte, de plus, une unité (11) de visualisation de données issues du module d'instrumentation (2).

8. Système selon l'une des revendications 6 et 7,
**caractérisé en ce qu'**il comporte, de plus, une unité (13) de saisie de données permettant à un opérateur de saisir des données.

9. Système selon l'une quelconque des revendications 6 à 8,
**caractérisé en ce qu'**il comporte, de plus, une unité (19) de présentation de résultats issus du module (7) de détection de bogues.

10. Système selon l'une quelconque des revendications 6 à 9,
**caractérisé en ce qu'**il comporte, de plus, un module (17) de classification de cas de test suspects identifiés.

11. Ensemble comprenant une chaîne d'algorithmes et un système (1) tel que celui spécifié sous l'une quelconque des revendications 6 à 10.

## Patentansprüche

1. Verfahren zur Unterstützung der Überprüfung und der funktionellen Validierung einer Algorithmenkette, wobei das Verfahren eine Folge von Schritten umfasst, mindestens umfassend:
a) einen Schritt der Instrumentierung der Algorithmenkette, der eine automatische Erfassung von Daten durchführt, die zumindest bestimmte der folgenden Daten umfassen: Schnittstellendaten und interne Algorithmendaten der Algorithmenkette, wobei der Schritt a) darin besteht, Sicherungsdateien zu lesen, in denen ein Datensatz der Algorithmenkette gespeichert ist, und Abfragen bezüglich der in diesen Sicherungsdateien enthaltenen Daten durchzuführen;
b) einen Schritt der automatischen Überprüfung der funktionellen Regeln, wobei der Schritt b) konfiguriert ist, um ein Erkennen einer Verletzung der Regeln zu ermöglichen, und um ein Erkennen zu ermöglichen, ob Elemente von einem Bediener überprüft werden müssen;
c) einen Schritt des Lernens zum Modellieren durch Lernen der Einschränkungen und der Kriterien von Algorithmen der Algorithmenkette unter Berücksichtigung der durch einen menschlichen Bediener bei einer funktionellen Validierung durchgeführten Validierungen und der erfassten Daten, wobei das Lernen Mittel verwendet, die auf einem der folgenden Merkmale basieren:
- Support-Vektor-Maschinen;
- neuronale Netze;
- Entscheidungsbäume;
- statistische Verfahren; und
- eine lineare Diskriminanzanalyse; und
d) einen Schritt der automatischen Erkennung von Programmierfehlem oder funktionellen Problemen der Algorithmenkette mit Hilfe von statistischen Lemmitteln, wobei der Schritt d) mit Hilfe von statistischen Lernmitteln eine Korrelation der Daten durchführt, die zumindest Daten der Algorithmenkette umfassen, um allgemeine Regeln der Änderungen der Ausgaben von Algorithmen der Algorithmenkette zu bestimmen und eine Warnung auszugeben, wenn eine Änderung erkannt wird, die größer als ein gegebener Schwellenwert einer Ausgabe des Algorithmus im Verhältnis zu einer vorhergesagten Ausgabe ist.

2. Verfahren nach Anspruch 1,
**dadurch gekennzeichnet, dass** der Schritt c) konfiguriert ist:
- um eine Analyse der funktionellen Struktur der Algorithmenkette und eines zugehörigen Codes durchzuführen;
- um einen Lernvorgang mit Hilfe von aufgezeichneten Testfällen durchzuführen, die von einem Bediener geliefert werden; und
- um die zutreffenden Testfälle und solche, die verdächtig sind, zu identifizieren und um dem Bediener zumindest die identifizierten verdächtigen Testfälle darzustellen.

3. Verfahren nach einem der Ansprüche 1 und 2,
**dadurch gekennzeichnet, dass** der Schritt d) die Änderung der Ergebnisse der Algorithmenkette in einer Weise analysiert, um, falls vorhanden, Diskontinuitäten und abnormale Änderungen zu erkennen.

4. Verfahren nach einem der vorstehenden Ansprüche,
**dadurch gekennzeichnet, dass** es einen zusätzlichen Schritt e) der Klassifizierung von identifizierten verdächtigen Testfällen umfasst.

5. Verfahren nach einem der vorstehenden Ansprüche,
**dadurch gekennzeichnet, dass** es einen Schritt der Definition von Metriken und von Visualisierung dieser Metriken umfasst.

6. System zur Unterstützung der Überprüfung und der funktionellen Validierung einer Algorithmenkette, wobei das System (1) einen Satz (9) Sicherungsdateien, in denen Daten der Algorithmenkette gespeichert sind, und zumindest die folgenden Module aufweist, die von einem Expertensystem koordiniert werden:
- ein Modul (2) zur Instrumentierung der Algorithmenkette, das eine automatische Erfassung von Daten durchführt, die zumindest bestimmte der folgenden Daten umfassen: Schnittstellendaten und interne Algorithmendaten der Algorithmenkette, wobei das Modul (2) zur Instrumentierung konfiguriert ist, um die Sicherungsdateien zu lesen und Abfragen bezüglich der in diesen Sicherungsdateien enthaltenen Daten durchzuführen;
- ein Modul (3) zur automatischen Überprüfung von funktionellen Regeln, um ein Erkennen einer Verletzung der Regeln zu ermöglichen, und um ein Erkennen, ob Elemente von einem Bediener überprüft werden müssen, zu ermöglichen;
- ein Lernmodul (5) zur Modellierung durch Lernen der Einschränkungen und der Kriterien von Algorithmen der Algorithmenkette unter Berücksichtigung der durch einen menschlichen Bediener bei einer funktionellen Validierung durchgeführten Validierungen und der von dem Modul (2) zur Instrumentierung erfassten Daten, wobei das Lernmodul (5) Mittel umfasst, die auf einem der folgenden Merkmale basieren:
• Support-Vektor-Maschinen;
• neuronale Netze;
• Entscheidungsbäume;
• statistische Verfahren; und
• eine lineare Diskriminanzanalyse; und
- ein Modul (7) zur automatischen Erkennung von Programmierfehlem oder funktionellen Problemen der Algorithmenkette mit Hilfe von statistischen Lemmitteln, wobei das Modul (5) mit Hilfe von statistischen Lernmitteln eine Korrelation der Daten durchführt, die zumindest Daten der Algorithmenkette umfassen, um allgemeine Regeln der Änderungen der Ausgaben von Algorithmen der Algorithmenkette zu bestimmen, wobei eine Warnung ausgegeben wird, wenn eine Änderung erkannt wird, die größer als ein gegebener Schwellenwert einer Ausgabe eines Algorithmus im Verhältnis zu einer vorhergesagten Ausgabe ist.

7. System nach Anspruch 6,
**dadurch gekennzeichnet, dass** es zudem eine Einheit (11) zur Visualisierung der von dem Modul (2) zur Instrumentierung stammenden Daten aufweist.

8. System nach einem der Ansprüche 6 und 7,
**dadurch gekennzeichnet, dass** es zudem eine Einheit (13) zur Eingabe von Daten aufweist, die einem Bediener die Eingabe von Daten ermöglicht.

9. System nach einem der Ansprüche 6 bis 8,
**dadurch gekennzeichnet, dass** es zudem eine Einheit (19) zur Darstellung von Ergebnissen aufweist, die von dem Modul (7) zur Erkennung von Programmierfehlern stammen.

10. System nach einem der Ansprüche 6 bis 9,
**dadurch gekennzeichnet, dass** es zudem ein Modul (17) zur Klassifizierung von identifizierten verdächtigen Testfällen aufweist.

11. Anordnung, umfassend eine Algorithmenkette und ein System (1) wie demjenigen, das in einem der Ansprüche 6 bis 10 spezifiziert ist.

## Claims

1. Method for assisting the verification and operational validation of an algorithm chain, said method comprising a sequence of steps comprising at least:
a) a step of instrumenting the algorithm chain, automatically capturing data that include at least some of the following data: interface data and internal algorithm data of the algorithm chain, step a) consisting in reading the backup files in which is stored a data set of the algorithm chain and creating queries about the data contained in said backup files;
b) a step of automatically verifying functional rules, step b) being configured to be able to detect a breach of the rules and to be able to detect if elements have to be verified by an operator;
c) a learning step for modelling by learning the constraints and algorithm criteria of the algorithm chain, taking into account validations carried out by a human operator, when operational validation is carried out, and data captured, the learning using means based on one of the following features :
- support vector machines;
- neural networks;
- decision trees ;
- statistical methods ; and
- linear discriminant analysis ; and
d) a step of automatically detecting bugs or functional problems in the algorithm chain using statistical learning means, step d) carrying out a correlation of the data that include at least data of the algorithm chain, using statistical learning means, in order to determine general rules of variations in algorithm outputs of the algorithm chain, and sending a warning if a variation greater than a given threshold of an algorithm output compared with a predetermined output is detected.

2. Method according to claim 1,
**characterised in that** step c) is configured:
- to carry out an analysis of a functional structure of the algorithm chain and an associated code;
- to carry out a learning process using the noted test cases that are provided by an operator; and
- to identify the relevant and suspect test cases and to present to the operator at least the suspect test cases identified.

3. Method according to one of claims 1 and 2,
**characterised in that** step d) analyses the variation in algorithm results of the algorithm chain so as to detect, where necessary, discontinuities and abnormal variations.

4. Method according to any of the preceding claims,
**characterised in that** it comprises an additional step e) of classifying suspect test cases identified.

5. Method according to any of the preceding claims,
**characterised in that** it comprises a step of defining metrics and displaying said metrics.

6. System for assisting the verification and operational validation of an algorithm chain, said system (1) comprising a set (9) of backup files in which data of the algorithm chain are stored, and at least the following modules, coordinated by an expert system:
- an module (2) for instrumenting the algorithm chain, automatically capturing data that include at least some of the following data: interface data and internal algorithm data of the algorithm chain, the instrumentation module (2) being configured to read the backup files and to create queries about the data contained in said backup files;
- a module (3) for automatically verifying functional rules, in order to be able to detect a breach of the rules and to be able to detect if elements have to be verified by an operator;
- a learning module (5) for modelling by learning the constraints and algorithm criteria of the algorithm chain, taking into account validations carried out by a human operator, when operational validation is carried out, and data captured by the instrumentation module (2), the learning module (5) comprising means based on one of the following features :
- support vector machines;
- neural networks;
- decision trees;
- statistical methods ; and
- linear discriminant analysis ; and
- a module (7) for automatically detecting bugs or operational problems in the algorithm chain using statistical learning means, said module (5) carrying out a correlation of the data that include at least data of the algorithm chain using statistical learning means in order to determine general rules of variations in algorithm outputs of the algorithm chain, a warning being sent if a variation greater than a given threshold of an algorithm output compared with a predetermined output is detected.

7. System according to claim 6,
**characterised in that** it further comprises a unit (11) for displaying data from the instrumentation module (2).

8. System according to any of claims 6 and 7,
**characterised in that** it further comprises a data entry unit (13) making it possible for an operator to enter data.

9. System according to any of claims 6 to 8,
**characterised in that** it further comprises a unit (19) for presenting the results from the module (7) for detecting bugs.

10. System according to any of claims 6 to 9,
**characterised in that** it further comprises a module (17) for classifying suspect test cases identified.

11. Assembly comprising an algorithm chain and a system (1) such as that defined in any of claims 6 to 10.
